(19) Europäisches Patentamt / European Patent Office / Office européen des brevets

(11) **EP 3 661 767 B1**

(12) **EUROPÄISCHE PATENTSCHRIFT**

(45) Veröffentlichungstag und Bekanntmachung des Hinweises auf die Patenterteilung:
**07.04.2021   Patentblatt 2021/14**

(21) Anmeldenummer: **18724794.5**

(22) Anmeldetag: **03.05.2018**

(51) Int Cl.:
**B60C 11/13** *(2006.01)*        **B60C 11/24** *(2006.01)*

(86) Internationale Anmeldenummer:
**PCT/EP2018/061252**

(87) Internationale Veröffentlichungsnummer:
**WO 2019/025041 (07.02.2019 Gazette 2019/06)**

(54) **FAHRZEUGLUFTREIFEN MIT EINEM LAUFSTREIFEN UMFASSEND MINDESTENS EINEN ABRIEBINDIKATOR**

VEHICLE PNEUMATIC TYRE WITH A TREAD COMPRISING AT LEAST ONE WEAR INDICATOR

PNEUMATIQUE DE VÉHICULE COMPRENANT UNE BANDE DE ROULEMENT QUI COMPREND AU MOINS UN INDICATEUR D'USURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2017   DE 102017213113**

(43) Veröffentlichungstag der Anmeldung:
**10.06.2020   Patentblatt 2020/24**

(73) Patentinhaber: **Continental Reifen Deutschland GmbH**
**30165 Hannover (DE)**

(72) Erfinder:
• **LUTZ, André**
**30167 Hannover (DE)**
• **KRISTEN, Florian**
**30171 Hannover (DE)**

(74) Vertreter: **Continental Corporation**
**c/o Continental AG**
**Intellectual Property**
**Postfach 169**
**30001 Hannover (DE)**

(56) Entgegenhaltungen:
WO-A1-2015/185233        DE-A1- 3 627 833
DE-A1-102015 211 532     JP-A- 2012 056 445
JP-U- H0 452 911         KR-A- 20170 053 257
US-A- 2 706 509          US-A1- 2002 036 039
US-A1- 2012 090 748

**Beschreibung**

Die Erfindung betrifft einen Fahrzeugluftreifen mit einem Laufstreifen umfassend mindestens einen Abriebindikator, wobei der Abriebindikator in einem in den Laufstreifen hineinreichenden Einschnitt mit einer Tiefenerstreckung angeordnet ist, wobei ein zunehmender Laufstreifenabrieb eine Erstreckungsabmessung des Abriebindikators beeinflusst, und wobei mittels der Erstreckungsabmessung des Abriebindikators oder mittels einer durch den zunehmenden Laufstreifenabrieb beeinflussten Erstreckungsabmessung des Abriebindikators feststellbar ist, ob der Betrag der gegenwärtigen Tiefenerstreckung des Einschnittes über einem vordefinierten Grenzwert liegt.

Ein Fahrzeugluftreifen wird während seiner Verwendung in verschiedenen Fahrmanövern einer Reihe von physikalischen Kräften ausgesetzt. Solche physikalischen Kräfte können beispielsweise die Gewichtskraft des Fahrzeuges, welche insbesondere auf den mit dem Untergrund in Kontakt stehenden Laufstreifenabschnitt einwirkt, oder auch Trägheitskräfte des Fahrzeuges sein, welche beim Bremsen auf verschiedene Laufstreifenabschnitte einwirken. Durch diese und andere physikalischen Kräfte ist der Fahrzeugluftreifen einer bestimmten Belastung ausgesetzt, welche zu einer Reihe von Alterserscheinungen oder Schäden am Laufstreifen oder an einem anderen Teil des Fahrzeugluftreifens führen kann. Schäden können beispielsweise aufgrund eines lange andauernden Stillstandes des Fahrzeugluftreifens entstehen.

Eine mögliche Alterserscheinung am Laufstreifen kann beispielsweise in Form von Rissen im Laufstreifenmaterial an solchen Stellen auftreten, welche aufgrund der einwirkenden physikalischen Kräfte besonders intensiv beansprucht werden.

Eine weitere mögliche Alterserscheinung des Laufstreifens ist der Laufstreifenabrieb, welcher insbesondere dazu führt, dass sich die radiale Erstreckung der Einschnitte im Laufstreifen verkleinert. Die Einschnitte im Laufstreifen werden auch Rillen genannt und die radiale Erstreckung der Einschnitte wird auch die Profiltiefe genannt. Die Verkleinerung der radialen Erstreckung der Einschnitte im Laufstreifen durch den Laufstreifenabrieb führt zu einer Verschlechterung der Haftung des Fahrzeugluftreifens auf dem Fahrbahnuntergrund.

Die WO 2015/185233 A1 zeigt einen Laufstreifen mit einer auf der Rillenseitenwand versehenen Vielzahl von als gleichschenklige Erhebungsdreiecke geformten Abriebindikatoren. Die DE 10 2015 211532 A1 offenbart einen Laufstreifen mit einem auf der Rillenseitenwand versehenen als Erhebungsdreieck geformten Abriebindikator, wovon sich eine Dreieckskathete koplanar mit der Laufstreifenoberfläche erstreckt.

Eine Aufgabe, die der Erfindung zugrunde liegt, besteht darin, einen Fahrzeugluftreifen bereitzustellen, der Abriebindikator aufweist und Alterserscheinungen verhindert oder zumindest reduziert.

Gelöst wird diese Aufgabe erfindungsgemäß durch einen Fahrzeugluftreifen laut Anspruch 1.

Ein häufiges Problem bei Laufstreifen von im Stand der Technik bekannten Fahrzeugluftreifen ist das Auftreten von so genannten "groove cracks".

Diese "groove cracks" können sich bei weiterer Benutzung des Reifens vergrößern und gegebenenfalls bis hinunter zu den Gürteln wachsen. Dieses würde zu einem Funktionsverlust des Reifen und einem Sicherheitsrisiko führen.

Solche "groove cracks" entstehen meist nach einer bestimmten Einsatzzeit des Fahrzeugluftreifens am Rillengrund bzw. Grund der Einschnitte im Laufstreifen eines Fahrzeugluftreifens.

Während der Rotation des Fahrzeugluftreifens werden die verschiedenen Abschnitte des Laufstreifens aufgrund der Gewichtskraft des Fahrzeugs unterschiedlich belastet. Diese zyklische Belastung der verschiedenen Laufstreifenabschnitte beim Fahren resultiert daraus, dass die Gewichtskraft des Fahrzeuges nur auf den die Fahrbahn kontaktierenden Laufstreifenabschnitt wirkt und sich dieser Abschnitt während der restlichen Umdrehung ums Rad wieder relaxiert, bevor er wieder belastet wird. Diese zyklische Belastung wird im Folgenden genauer beschrieben.

Der Abschnitt des Laufstreifens, welcher zu einem bestimmten Zeitpunkt mit dem Fahrbahnuntergrund in Kontakt ist, wird durch die Gewichtskraft des Fahrzeugs gestaucht. Eine Folge dieser Stauchung ist, dass die Einschnitte bzw. Rillen im Laufstreifen etwas enger werden, das heißt, dass die Rillenöffnungen in dem Bereich gestaucht werden, in dem der Laufstreifen mit dem Fahrbahnuntergrund in Kontakt ist. Sobald dieser Abschnitt des Laufstreifens nicht mehr mit dem Fahrbahnuntergrund in Kontakt steht, lastet die Gewichtskraft des Fahrzeuges auch nicht mehr auf diesem Laufstreifenabschnitt, wodurch die Einschnitte bzw. Rillen im Laufstreifen wieder gestreckt werden und sich die Seitenwände der Einschnitte wieder voneinander weg bewegen. Sobald sie erneut mit dem Fahrbahnuntergrund in Kontakt kommen, werden sie wieder gestaucht. Diese Auf-und-zu-Bewegung wird auch Scharnierbewegung genannt, da eine große Materialbelastung am Rillengrund entsteht, wie dies bei Scharnieren an der Scharnierachse auch der Fall ist. Diese Scharnierbewegung führt häufig zu Rissen und insbesondere zu "groove-cracks" am Rillengrund in einem Laufstreifen.

Ohne an irgendeine wissenschaftliche Theorie gebunden sein zu wollen, wurde überraschenderweise festgestellt, dass die Geometrie des Rillengrundes, insbesondere des Radius des Rillengrundes, dabei einen erheblichen Einfluss auf die Wahrscheinlichkeit hat, ob sich "groove cracks" am Rillengrund bilden. Je enger Radius oder allgemeiner je ungleichmäßiger der Rillengrund, desto höher die Wahrscheinlichkeit, dass sich "groove cracks" bilden.

Durch den Einsatz von im Stand der Technik bekannten Abriebindikatoren, welche sich ausschließlich am Rillengrund befinden und den Rillengrund daher ungleichmäßig machen, bilden sich daher häufiger "groove cracks" als an Abriebindikatoren eines erfindungsgemäßen Fahrzeugluftreifens, welche teilweise oder insbesondere ausschließlich an einer Seitenwand der Rille angeordnet sind. Ein erfindungsgemäßer Fahrzeugluftreifen verringert daher das Auftreten von den vorstehend beschriebenen Rissen am Rillengrund, den sogenannten "groove cracks".

Im Rahmen der vorliegenden Erfindung ist mit dem Ausdruck "Einschnitt" in der vorliegenden Beschreibung sowohl Einschnitt oder Rille gemeint.

Im Rahmen der vorliegenden Erfindung können ein oder mehrere Abriebindikatoren eines erfindungsgemäßen Fahrzeugluftreifens auf verschiedene Weisen hergestellt werden. Zu den Herstellungsverfahren eines erfindungsgemäßen Fahrzeugluftreifens mit einem Laufstreifen umfassend mindestens einen Abriebindikator zählen insbesondere, solche Herstellungsverfahren, welche mindestens einen der folgenden Schritte umfassen:

- Herstellen des vorstehend beschriebenen Abriebindikators mittels einer Vulkanisationsform,
- Herstellen des vorstehend beschriebenen Abriebindikators mittels Kerben oder anderweitiges Entfernen von vulkanisiertem Gummi, und/oder
- Herstellen des vorstehend beschriebenen Abriebindikators mittels Lasergravur einer Seitenwand eines Einschnittes in einem Laufstreifen eines erfindungsgemäßen Fahrzeugluftreifens.

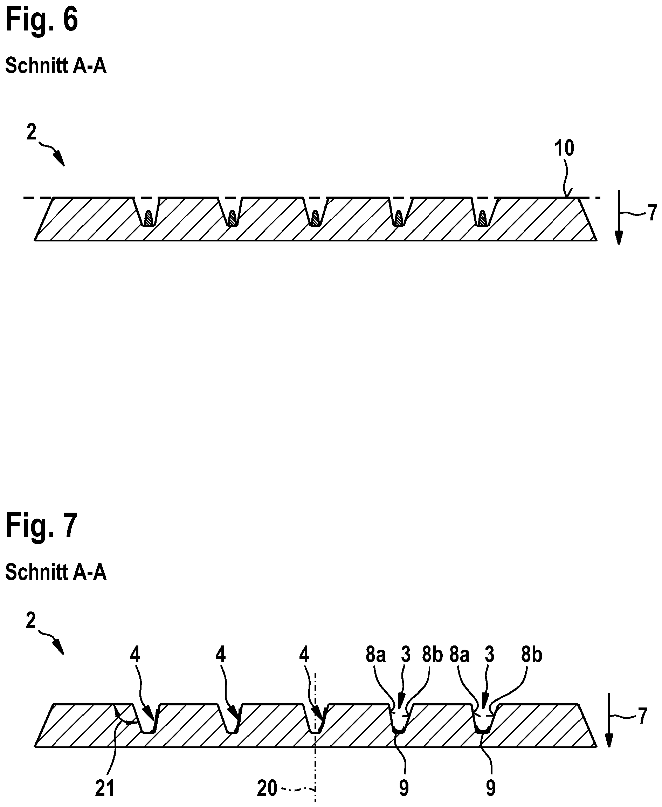

Im Rahmen der vorliegenden Erfindung ist die Seitenwand eines Einschnittes im Laufstreifen eines erfindungsgemäßen Fahrzeugluftreifens bevorzugt der den Einschnitt begrenzende Teil, welcher in einer ersten Erstreckungsrichtung in Richtung der Umlaufrichtung und geradlinig verläuft. Besonders bevorzugt erstreckt sich die Seitenwandfläche eines Einschnittes ebenflächig und in einer Erstreckungsrichtung in Richtung der Umlaufrichtung. In manchen Fällen erstreckt sich die andere zur ersten Erstreckungsrichtung orthogonalen Erstreckungsrichtung im Wesentlichen senkrecht zur Laufstreifenoberfläche. Der Ausdruck "im Wesentlichen senkrecht zur Laufstreifenoberfläche" umfasst ganz besonders bevorzugt auch Seitenwandflächen eines V-förmigen Einschnittes, welche sich in einer ersten Erstreckungsrichtung in Richtung der Umlaufrichtung erstrecken und die andere zur ersten Erstreckungsrichtung orthogonalen Erstreckungsrichtung zur Laufstreifenoberfläche einen Winkel β im Bereich von 90° bis 150° bildet. Der Winkel β ist auch in Figur 7 dargestellt.

Bevorzugt ist auch im Rahmen der vorliegenden Erfindung die Seitenwand eines Einschnittes im Laufstreifen eines erfindungsgemäßen Fahrzeugluftreifens die den Einschnitt begrenzende und ebene Fläche, welche sich von der Einschnittsöffnung in Tiefenerstreckungsrichtung bis zu 90 % der Tiefenerstreckung des Einschnittes, vorzugsweise bis zur Hälfte in den Einschnitt hinein, erstreckt. Zur Abmessung der 90 % der Tiefenerstreckung des Einschnittes oder der Hälfte des Einschnittes wird die gesamte Länge der Tiefenerstreckung herangezogen.

Bevorzugt ist ein Fahrzeugluftreifen wie vorstehend beschrieben, wobei der Radius des Grundes des Einschnittes durch die Anwesenheit des Abriebindikators im Wesentlichen unverändert bleibt.

Aufgrund der häufig abgerundeten Übergangsbereiche zwischen dem Grund und der Seitenwand eines Einschnittes weist der Grund des Einschnittes meist einen bestimmten Radius auf. Je kleiner dieser Radius am Grund des Einschnittes im Laufstreifen ist, desto eher treten "groove cracks" an diesen Stellen am Grund des Einschnittes auf. Aufgrund des Einsatzes eines Abriebindikators am Grund des Einschnittes kann es nun passieren, dass der Radius des einen Übergangsbereiches oder beider Übergangsbereiche zu den Seitenwänden des Einschnittes sehr eng wird, wodurch die Wahrscheinlichkeit zur Bildung von "groove cracks" erhöht wird. Es ist daher vorteilhaft, wenn der Abriebindikator so im Einschnitt des Laufstreifens angebracht wird, dass er den besagten Radius am Grund des Einschnittes nicht verengt.

Der Grund eines Einschnittes ist im Rahmen der vorliegenden Erfindung bevorzugt die Seite des Einschnittes, welche auf der gegenüberliegenden Seite von der an der Laufstreifenoberfläche liegenden Öffnung des Einschnittes liegt. Die Grundfläche des Grundes des Einschnittes wird hierbei von den Seitenwänden des Einschnittes begrenzt. In den meisten Fällen werden Seitenwand und Grund des Einschnittes nicht durch eine scharfe Kante getrennt, so dass ein meist abgerundeter Übergangsbereich zwischen der Seitenwand und dem Grund des Einschnittes entsteht. Dieser Übergangsbereich zählt im Rahmen der vorliegenden Erfindung zum Grund des Einschnittes und nicht zu den Seitenwänden. Letztere bilden wie vorstehend beschrieben nur den den Einschnitt begrenzenden Teil, welcher im Wesentlichen senkrecht zur Laufstreifenoberfläche und geradlinig, vorzugsweise ebenflächig, verläuft.

Der Übergangsbereich des Grundes eines Einschnittes zu der einen Seitenwand des Einschnittes kann dem Übergangsbereich zur anderen Seitenwand gleichen, wodurch ein symmetrischer Grund des Einschnittes entstehen kann. Die beiden Übergangsbereiche eines Einschnittes können jedoch auch unterschiedlich sein, wodurch ein asymmetrischer Grund des Einschnittes entsteht. Letzteres tritt insbesondere an den Schulterbereichen eines Laufstreifens eines Fahrzeugluftreifens auf. Die Mittelrille eines Laufstreifens eines erfindungsgemäßen Fahrzeugluftreifens weist bevorzugt einen symmetrischen Grund auf, während die restlichen Rillengründe bevorzugt desto asymmetrischer sind, desto näher sie sich an einem Schulterbereich des Laufstreifens eines erfindungsgemäßen Fahrzeugluftreifen befinden. Je asymmetrischer der Rillengrund desto größer ist die Gefahr von Rissen am Rillengrund, insbesondere von "groove cracks".

Im Rahmen der vorliegenden Erfindung ist ein Abriebindikator bevorzugt eine Vorrichtung, an welcher feststellbar ist, ob die gegenwärtige Profiltiefe des Einschnittes über einem vordefinierten Grenzwert liegt. Vorzugsweise kann dies ohne weitere Hilfsmittel festgestellt werden. Vordefinierte Grenzwerte sind beispielsweise zwischen 1,6mm und 3,2mm. Sie richten sich nach den Vorgaben der für die jeweilige Region zuständigen offiziellen Behörde.

Im Rahmen der vorliegenden Erfindung ist ein in den Laufstreifen hineinreichender Einschnitt mit einer Tiefenerstreckung bevorzugt jede Aussparung im Laufstreifen eines erfindungsgemäßen Fahrzeugluftreifens, welche sich in radialer Richtung zur Achse des Fahrzeugluftreifens hin erstreckt. Im Rahmen der vorliegenden Erfindung ist die Tiefenerstreckung des in den Laufstreifen hineinreichenden Einschnittes die Erstreckung des Einschnittes, welche sich im Wesentlichen hin zur Achse des Fahrzeugluftreifens erstreckt, bevorzugt senkrecht zur Laufstreifenoberfläche.

Im Rahmen der vorliegenden Erfindung fällt unter den Ausdruck "Erstreckung des Abriebindikators" bevorzugt jede Länge einer Erstreckung des Abriebindikators mit einer Erstreckungsrichtung. Besonders bevorzugt erstreckt sich die Erstreckungsabmessung des Abriebindikators jedoch in radialer Richtung oder in Richtung einer der Seitenwände des Einschnittes, welche ganz besonders bevorzugt dazu geeignet ist, die gegenwärtige Tiefenerstreckung des Einschnittes im Laufstreifen zu ermitteln.

Im Rahmen der vorliegenden Erfindung ist die gegenwärtige Tiefenerstreckung des Einschnittes bevorzugt die maximal messbare und sich in radialer Richtung erstreckende Tiefenerstreckung des Einschnittes im Laufstreifen. Die Tiefenerstreckung des Einschnittes entspricht bevorzugt der dem Fachmann bekannten Profiltiefe des Fahrzeugluftreifens.

Bevorzugt ist ein Fahrzeugluftreifen wie vorstehend beschrieben, wobei der Abriebindikator an der Seitenwand der beiden Seitenwände des Einschnittes angebracht ist, welche näher zur Laufstreifenmitte liegt.

Ein Vorteil des vorstehend beschriebenen Aspekts der vorliegenden Erfindung ist, dass der diese Seitenwand besser eingesehen werden kann, wenn sich der Fahrzeugluftreifen am Fahrzeug befindet, und dass die Gefahr von "groove cracks" zusätzlich vermieden wird, da die vorstehend beschriebene Scharnierbewegung den Übergangsbereich an der von der Laufstreifenmitte abgewandten Seitenwand stärker verformt.

Im Rahmen der vorliegenden Erfindung verläuft die Mittelrille bevorzugt genau in der Laufstreifenmitte parallel zur Umlaufrichtung des erfindungsgemäßen Fahrzeugluftreifens. In manchen Fällen verläuft auch keine Rille durch die Laufstreifenmitte eines erfindungsgemäßen Fahrzeugluftreifens, welche dann keine Mittelrille aber dennoch eine Laufstreifenmitte aufweisen.

Die Laufstreifenmitte verläuft bevorzugt genau durch die geometrische Mitte des mittleren Bereiches des Laufstreifens.

Bevorzugt ist ein Fahrzeugluftreifen wie vorstehend beschrieben oder wie vorstehend als bevorzugt beschrieben, wobei sich der zur Feststellung der Grenzwertunterschreitung geeignete Betrag der gegenwärtigen Tiefenerstreckung im Wesentlichen aus dem Produkt eines vorgegebenen Faktors mit der Erstreckungsabmessung des Abriebindikators oder mit der durch den zunehmenden Laufstreifenabrieb beeinflussten Erstreckungsabmessung des Abriebindikators berechnet, wobei der Faktor im Bereich von 1 bis 3 liegt, bevorzugt im Bereich von 1 bis 2, besonders bevorzugt im Bereich von 1 bis 1,5 ist.

Ein Vorteil des vorstehend beschriebenen Aspekts der vorliegenden Erfindung ist, dass der Abriebindikator sich nicht über die gesamte Seitenwand des Einschnittes erstrecken braucht, sondern nur entsprechend über $\frac{1}{3}$, $\frac{2}{3}$ oder ½ der Seitenwand.

Bevorzugt ist ein Fahrzeugluftreifen wie vorstehend beschrieben oder wie vorstehend als bevorzugt beschrieben, wobei die Tiefenerstreckungsrichtung der Tiefenerstreckung des Einschnittes im Wesentlichen senkrecht zur Laufstreifenoberfläche ist.

Ein Vorteil des vorstehend beschriebenen Aspekts der vorliegenden Erfindung ist, dass der Abriebindikator bei einer Inspektion der Profiltiefe diese besser ablesen kann.

Bevorzugt ist ein Fahrzeugluftreifen wie vorstehend beschrieben oder wie vorstehend als bevorzugt beschrieben, wobei der in den Laufstreifen hineinreichende Einschnitt sich im Schulterbereich des Laufstreifens befindet.

Ein Vorteil des vorstehend beschriebenen Aspekts der vorliegenden Erfindung ist, dass Abriebindikatoren an Seitenwänden von Einschnitten im Schulterbereich besser gesehen werden können, wenn der Fahrzeugluftreifen am Fahrzeug montiert ist. Besonders bevorzugt befindet sich der Abriebindikator in einem erfindungsgemäßen Fahrzeugluftreifen daher auch an der Seitenwand der beiden Seitenwände eines Einschnittes im Schulterbereich, welche sich näher zur Mitte des Fahrzeugluftreifens befindet.

Im Rahmen der vorliegenden Erfindung ist der Schulterbereich eines Laufstreifens eines erfindungsgemäßen Fahrzeugluftreifens der Bereich, welcher axial außerhalb der äußeren Umfangsrillen liegt, wobei die besagten äußeren Umfangsrillen im Rahmen der vorliegenden Erfindung zum Schulterbereich gezählt werden. Der Bereich zwischen den äußeren Umfangsrillen ist im Rahmen der vorliegenden Erfindung der mittlere Bereich des Laufstreifens.

Bevorzugt ist ein Fahrzeugluftreifen wie vorstehend beschrieben oder wie vorstehend als bevorzugt beschrieben, wobei der Abriebindikator an einer zur Tiefenerstreckung des Einschnittes im Wesentlichen parallelen Seitenwand des Einschnittes angeordnet ist.

Bevorzugt ist ein Fahrzeugluftreifen wie vorstehend beschrieben oder wie vorstehend als bevorzugt beschrieben, wobei sich der Abriebindikator nicht auf die Grundfläche des Einschnittes erstreckt, welche der Öffnung des Einschnittes in der Laufstreifenoberfläche gegenüber liegt.

Im Rahmen der vorliegenden Erfindung ist die Laufstreifenoberfläche bevorzugt die Fläche des Laufstreifens, welche bei allgemeinem Fahrbetrieb mit dem Fahrbahnuntergrund in Kontakt tritt.

Bevorzugt ist ein Fahrzeugluftreifen wie vorstehend beschrieben oder wie vorstehend als bevorzugt beschrieben, wobei der Einschnitt eine Haupterstreckung mit einer Haupterstreckungsrichtung aufweist, wobei die Haupterstreckungsrichtung des Einschnittes im Wesentlichen parallel zur Umlaufrichtung des Fahrzeugluftreifens ist. Bevorzugt ist die Haupterstreckungsrichtung dabei im Wesentlichen senkrecht zur Tiefenerstreckungsrichtung.

Ein Vorteil des vorstehend beschriebenen Aspekts der vorliegenden Erfindung ist, dass die Einschnitte durch die Rotation der Fahrzeugluftreifen beim Fahren gleichmäßig über die gesamte Umlaufrichtung abgerieben werden und somit ein Abriebindikator pro Einschnitt ausreicht, um die ungefähre gegenwärtigen Tiefenerstreckung des Einschnittes zu berechnen.

Bevorzugt ist ein Fahrzeugluftreifen wie vorstehend beschrieben oder wie vorstehend als bevorzugt beschrieben, wobei der Einschnitt in Haupterstreckungsrichtung geradlinig und/oder Zick-Zack-förmig verläuft. Ein Einschnitt kann teilweise geradlinig und teilweise zick-zack-förmig verlaufen. In einer Ausführungsform ist es auch vorteilhaft, dass ein erfindungsgemäßer Fahrzeugluftreifen sowohl geradlinig als auch zick-zack-förmig verlaufende Einschnitte aufweist. Bevorzugt ist auch ein erfindungsgemäßer Fahrzeugluftreifen wie vorstehend beschrieben oder wie vorstehend als bevorzugt beschrieben, wobei der Fahrzeugluftreifen mindestens zwei Einschnitte umfasst, wobei mindestens ein Einschnitt in Haupterstreckungsrichtung geradlinig und mindestens ein Einschnitt in Haupterstreckungsrichtung Zick-Zack-förmig verläuft.

Ein Vorteil des vorstehend beschriebenen Aspekts der vorliegenden Erfindung ist, dass insbesondere bei Zick-Zack-förmigen Einschnitten besonders häufig "groove cracks" auftreten, da die Zick-Zack-förmige Grundfläche dieser Einschnitte mehr Kanten und somit mehr mögliche Bruchstellen aufweist. Bevorzugt befindet sich ein Zick-Zack-förmiger Einschnitt im mittleren Bereich des Laufstreifens.

In manchen Fällen kann ein Fahrzeugluftreifen wie vorstehend beschrieben oder wie vorstehend als bevorzugt beschrieben bevorzugt sein, wobei der Einschnitt in Haupterstreckungsrichtung geradlinig verläuft, wobei der Einschnitt sich besonders bevorzugt im Schulterbereich des Laufstreifens befindet.

Ein Vorteil des vorstehend beschriebenen Aspekts der vorliegenden Erfindung ist, dass die Gefahr von "groove cracks" in Einschnitten im Schulterbereich des Laufstreifens reduziert wird, da diese Gefahr in Einschnitten im Schulterbereich des Laufstreifens besonders hoch ist.

Bevorzugt ist ein Fahrzeugluftreifen wie vorstehend beschrieben oder wie vorstehend als bevorzugt beschrieben, wobei
der Fahrzeugluftreifen ein Nutzfahrzeugreifen ist,
wobei die Höhe der Tiefenerstreckung des Einschnittes in den Laufstreifen bevorzugt im Bereich zwischen 8 und 36 mm liegt, besonders bevorzugt im Bereich zwischen 10 und 26mm liegt.

Ein Vorteil des vorstehend beschriebenen Aspekts der vorliegenden Erfindung ist, dass die Gefahr von "groove cracks" in Laufstreifen eines Nutzfahrzeugreifens reduziert wird, da diese Gefahr in Laufstreifen eines Nutzfahrzeugreifens besonders hoch ist, weil die Gewichtskraft des Nutzfahrzeugs größer ist. Es gilt das zuvor gesagte.

Besonders bevorzugt ist ein Fahrzeugluftreifen wie vorstehend beschrieben oder wie vorstehend als bevorzugt beschrieben, wobei der Abriebindikator eine Erhebung an der Seitenwand des in den Laufstreifen hineinreichenden Einschnittes ist, wobei die Erhebung bevorzugt sich zwischen 0,1 bis 3 mm von der Seitenwand abhebt, besonders bevorzugt zwischen 0,3 bis 2 mm, ganz besonders bevorzugt zwischen 0,5 bis 1 mm.

Die Höhe der Erhebung ist immer ein Kompromiss aus der Sichtbarkeit des Abriebindikators und der Herstellbarkeit und der Beeinflussung der Reifenperformance. Je größer der Reifen und damit auch die Rille, desto größer kann die Erhebung ausgeführt werden.

Vorteil der Erfindung ist, dass der Kontrast und die Sichtbarkeit bei diesen Ausführungen besonders ausgeprägt sind.

Laut der Erfindung ist die Erhebung

- eine von der Seitenwand des Einschnittes erhabene dreiecksförmige Fläche, oder
- eine von der Seitenwand des Einschnittes erhabene Linie, wobei die Linie vollumfänglich eine dreiecksförmige Fläche begrenzt,

ist, wobei
die dreiecksförmige Fläche ein rechtwinkliges Dreieck mit zwei unterschiedlich langen Katheten umfasst, wobei die längere oder die kürzere Kathete parallel zur Laufstreifenoberfläche verläuft.

Der rechte Winkel gibt die Richtung des Abriebs vor und vermittelt die Assoziation, dass etwas abläuft oder geringer wird. Damit ist intuitiv klar, wann das Ende erreicht ist und der Reifen ausgetauscht werden muss.

Insbesondere ganz besonders bevorzugt ist ein Fahrzeugluftreifen wie vorstehend als ganz besonders bevorzugt beschrieben, wobei das Verhältnis von der Länge der kürzeren Kathete zu der Länge der längeren Kathete im Bereich von 6 bis 1,01 liegt, bevorzugt im Bereich von 3 bis 1,5.

Ein Vorteil des vorstehend beschriebenen Aspekts der vorliegenden Erfindung ist, dass die Richtung in dieser Ausführung stärker betont wird.

Insbesondere ganz besonders bevorzugt ist ein Fahrzeugluftreifen wie vorstehend als ganz besonders bevorzugt beschrieben oder wie vorstehend als insbesondere ganz besonders bevorzugt beschrieben, wobei die lange Kathete des Dreiecks oder die kurze Kathete des Dreiecks

- parallel zur Tiefenerstreckungsrichtung des Einschnittes ist und
- eine Länge zwischen 40% bis 100% der Höhe der Tiefenerstreckung des Einschnittes aufweist, bevorzugt eine Länge zwischen 60% bis 95% der Höhe der Tiefenerstreckung des Einschnittes.

Bevorzugt ist ein Fahrzeugluftreifen wie vorstehend beschrieben, wie vorstehend als bevorzugt beschrieben, wie vorstehend als besonders bevorzugt beschrieben oder wie vorstehend als ganz besonders bevorzugt beschrieben, wobei der Abriebindikator auch einen Schriftzug "TWI" umfasst. Dies ermöglicht es einem Fachmann schnell den Abriebindikator am Fahrzeugluftreifen zu identifizieren.

Bevorzugt ist ein Fahrzeugluftreifen wie vorstehend beschrieben, wie vorstehend als bevorzugt beschrieben, wie vorstehend als besonders bevorzugt beschrieben oder wie vorstehend als ganz besonders bevorzugt beschrieben, wobei der Fahrzeugluftreifen ein Nutzfahrzeugreifen ist,

wobei die Höhe der Tiefenerstreckung des Einschnittes in den Laufstreifen bevorzugt im Bereich zwischen 8 und 36 mm liegt, besonders bevorzugt im Bereich zwischen 10 und 26 mm liegt.

Ein Vorteil des vorstehend beschriebenen Aspekts der vorliegenden Erfindung ist, dass mithilfe des vorstehend beschriebene Abriebindikators eines erfindungsgemäßen Fahrzeugluftreifens "groove cracks" bei Nutzfahrzeugreifen besonders gut vermieden werden können, da Nutzfahrzeugluftreifen besonders anfällig für "groove cracks" sind.

In besonders hohem Maße bevorzugt ist ein Fahrzeugluftreifen wie vorstehend beschrieben oder wie vorstehend als bevorzugt beschrieben,

- wobei der Abriebindikator in einem in den Laufstreifen hineinreichenden Einschnitt mit einer Tiefenerstreckung angeordnet ist, wobei ein zunehmender Laufstreifenabrieb eine Erstreckungsabmessung des Abriebindikators beeinflusst, und

  - wobei mittels der Erstreckungsabmessung des Abriebindikators oder mittels einer durch den zunehmenden Laufstreifenabrieb beeinflussten Erstreckungsabmessung des Abriebindikators feststellbar ist, ob der Betrag der gegenwärtigen Tiefenerstreckung des Einschnittes über einem vordefinierten Grenzwert liegt,

dadurch gekennzeichnet, dass
der Abriebindikator an einer Seitenwand des in den Laufstreifen hineinreichenden Einschnittes angeordnet ist, wobei

- der in den Laufstreifen hineinreichende Einschnitt sich im Schulterbereich des Laufstreifens befindet,
- die Tiefenerstreckungsrichtung der Tiefenerstreckung des Einschnittes im Wesentlichen senkrecht zur Laufstreifenoberfläche ist,
- der Einschnitt eine Haupterstreckung mit einer Haupterstreckungsrichtung aufweist, wobei die Haupterstreckungsrichtung des Einschnittes im Wesentlichen parallel zur Umlaufrichtung des Fahrzeugluftreifens ist,
- die Haupterstreckungsrichtung im Wesentlichen senkrecht zur Tiefenerstreckungsrichtung ist,
- der Einschnitt in Haupterstreckungsrichtung geradlinig verläuft,
- der Abriebindikator eine Erhebung an der Seitenwand des in den Laufstreifen hineinreichenden Einschnittes ist und die Erhebung

    eine von der Seitenwand des Einschnittes erhabene dreiecksförmige Fläche,
    oder
    eine von der Seitenwand des Einschnittes erhabene Linie, wobei die Linie vollumfänglich eine dreiecksförmige Fläche begrenzt,
    ist, wobei

  - die dreiecksförmige Fläche ein rechtwinkliges Dreieck mit zwei unterschiedlich langen Katheten umfasst, wobei die längere oder die kürzere Kathete parallel zur Laufstreifenoberfläche verläuft,
  - das Längenverhältnis von der Länge der kürzeren Kathete zu der Länge der längeren Kathete im Bereich von 6 bis 1,01 liegt, bevorzugt im Bereich von 3 bis 1,5,
  - die lange Kathete des Dreiecks parallel zur Tiefenerstreckungsrichtung des Einschnittes ist und
  - die lange Kathete des Dreiecks eine Länge zwischen 40% bis 100% der Höhe der Tiefenerstreckung des Einschnittes aufweist, bevorzugt eine Länge zwischen 60% bis 95% der Höhe der Tiefenerstreckung des Einschnittes,

  und
- der Fahrzeugluftreifen ein Nutzfahrzeugreifen ist,

wobei die Höhe der Tiefenerstreckung des Einschnittes in den Laufstreifen im Bereich zwischen 8 und 36 mm liegt, besonders bevorzugt im Bereich zwischen 10 und 26 mm liegt.

Weitere Merkmale, Vorteile und Einzelheiten, auf die die Erfindung in ihrem Umfang aber nicht beschränkt ist, werden nun anhand der Figuren 1 bis 9 näher beschrieben.

Figurenbeschreibung:

Figur 1:    Erfindungsgemäßer Fahrzeugluftreifen mit einem Laufstreifen;

Figur 2:    Aufsicht in radialer Richtung auf einen Abschnitt eines Laufstreifens eines erfindungsgemäßen Fahrzeugluftreifens mit geradlinigen und zick-zackförmigen Umfangsrillen, wobei der Laufstreifenabschnitt dem Abschnitt A aus Figur 1 entspricht;

Figur 3:    Querschnittansicht eines Querschnittes eines erfindungsgemäßen Fahrzeugluftreifens entlang des Schnittes A-A wie in Figur 2 gezeigt

Figur 4:    Querschnittansicht eines Querschnittes eines erfindungsgemäßen Fahrzeugluftreifens entlang des Schnittes B-B wie in Figur 2 gezeigt

Figur 5:    Querschnittansicht eines Querschnittes eines erfindungsgemäßen Fahrzeugluftreifens entlang des Schnittes C-C wie in Figur 2 gezeigt

Figur 6:    Querschnittansicht eines Querschnittes eines nicht erfindungsgemäßen Fahrzeugluftreifens gezeigt

Figur 7:    Querschnittansicht eines Querschnittes eines erfindungsgemäßen Fahrzeugluftreifens entlang des Schnittes A-A wie in Figur 2 gezeigt

Figur 8:    Aufsicht auf einen sogenannten "groove crack", welcher an einem TWI entstanden ist, der an der Grundfläche eines Eischnittes im Laufstreifens eines nicht erfindungsgemäßen Fahrzeugluftreifens aufgebracht ist

Figur 9:    Querschnittansicht eines Querschnittes eines erfindungsgemäßen Fahrzeugluftreifens entlang des Schnittes B-B wie in Figur 2 gezeigt

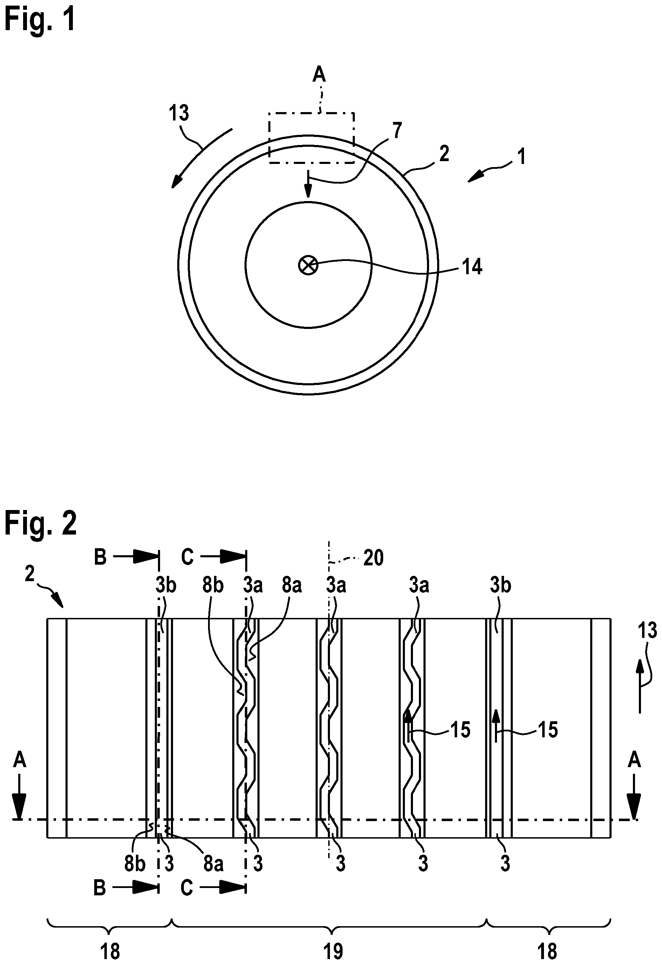

Figur 1 zeigt eine schematische Darstellung eines Fahrzeugluftreifens mit einem Laufstreifen. Zudem sind die Umlaufrichtung des Fahrzeugluftreifens, die radiale Richtung und die axiale Richtung des Fahrzeugluftreifens dargestellt.

Figur 2 zeigt eine schematische Darstellung eines Abschnittes eines Laufstreifens 2 eines erfindungsgemäßen Fahrzeugluftreifens 1 mit geradlinigen und zickzack-förmigen Einschnitten 3. Die Einschnitte 3b im Schulterbereich 18 des Abschnittes des Laufstreifens 2 sind geradlinige Einschnitte 3b, während die drei Einschnitte 3a, welche im mittleren Bereich 19 des Laufstreifens in Umfangsrichtung verlaufen, zickzack-förmige Einschnitte 3a sind. Der Schnitt B-B verläuft entlang der Seitenwand 8b des geradlinigen Einschnittes 3b, wobei die Seitenwand 8a dieses Einschnittes 3b näher an der Laufstreifenmitte liegt. Der Schnitt C-C verläuft abwechselnd entlang der Seitenwände 8a und 8b des zickzack-förmige Einschnittes 3a, wobei die Seitenwand 8a dieses Einschnittes 3b näher an der Laufstreifenmitte und dieser zickzack-förmige Einschnitt 3a im mittleren Bereich 10 des Laufstreifens 2 liegt. Gezeigt ist auch die Laufstreifenmitte 20, entlang welcher die Mittelrille des Laufstreifens 2 verläuft.

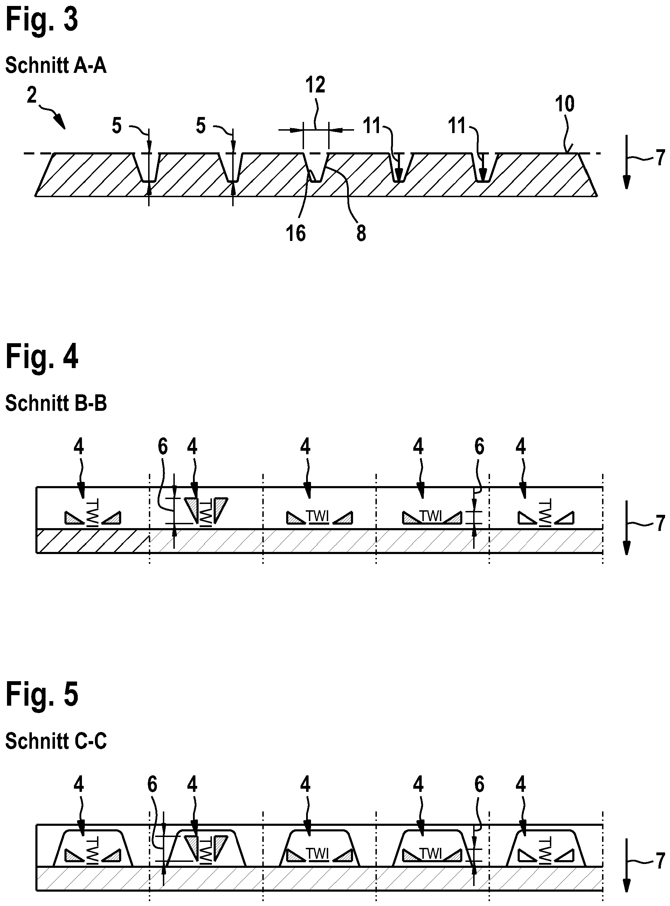

Figur 3 zeigt eine Querschnittsansicht eines Querschnittes eines erfindungsgemäßen Fahrzeugluftreifens 1 entlang des Schnittes A-A wie in Figur 2 gezeigt. Gezeigt sind auch die Laufstreifenoberfläche 10, die jeweiligen Tiefenerstreckungen 5 der jeweiligen Einschnitte 3 sowie die Tiefenerstreckungsrichtung 11 der gezeigten Einschnitte 3. Zudem ist die Öffnung 12 eines Einschnittes 3 eines Laufstreifens 2 eines erfindungsgemäßen Fahrzeugluftreifens gezeigt. Gezeigt sind die Richtung 7 des Laufstreifenabriebs, welcher der radialen Richtung entgegen gesetzt ist, und der symmetrische Grund 16 und die Seitenwand 8 einer Mittelrille.

Figur 4 zeigt eine Querschnittsansicht eines Querschnittes durch einen geradlinigen Einschnitt 3b eines erfindungsgemäßen Fahrzeugluftreifens 1 entlang des Schnittes B-B wie in Figur 2 gezeigt. Gezeigt sind verschiedene mögliche Varianten von Abriebindikatoren 4 an einer Seitenwand 8b, welche mit Hilfe von erhabenen Flächen oder erhabenen Linien, welche Flächen umgrenzen, dargestellt werden können. Die dargestellten Flächen bzw. die mit erhabenen Linien begrenzten Flächen stellen in Figur 4 ausschließlich rechtwinklige Dreiecke mit einem Schriftzug ("TWI") dar. Dargestellt auch sind zwei mögliche Erstreckungsabmessungen 6 von Abriebindikatoren 4, welche aufgrund des Laufstreifenabriebs in dessen naturgegebene Richtung 7 beeinflusst werden können.

Figur 5 zeigt eine Querschnittsansicht eines Querschnittes durch einen geradlinigen Einschnitt 3a eines erfindungsgemäßen Fahrzeugluftreifens 1 entlang des Schnittes C-C wie in Figur 2 gezeigt. Gezeigt sind verschiedene mögliche Varianten von Abriebindikatoren 4, welche mit Hilfe von erhabenen Flächen oder erhabenen Linien, welche Flächen umgrenzen, dargestellt werden können. Die dargestellten Flächen bzw. die mit erhabenen Linien begrenzten Flächen stellen in Figur 4 ausschließlich rechtwinklige Dreiecke mit einem Schriftzug ("TWI") dar. Dargestellt auch sind zwei mögliche Erstreckungsabmessungen 6 von Abriebindikatoren 4, welche aufgrund des Laufstreifenabriebs in dessen naturgegebene Richtung 7 beeinflusst werden können. Ein Unterschied zu der Querschnittsansicht in Figur 4 ist, dass es sich bei der Darstellung in Figur 5 um die Querschnittsansicht eines zick-zack-förmigen Einschnittes 3a entlang der Linie C-C wie in Figur 2 dargestellt handelt. Die in Figur 5 dargestellten Erhebung der Abriebindikatoren 4 zeigen daher abwechselnd aus der Papierebene heraus oder in die Papierebene hinein, da es sich wie in Figur 2 gezeigt abwechselnd um einen Abriebindikator 4 an der Seitenwand 8a des Einschnittes oder um einen darauffolgenden Abriebindikator 3 an der Seitenwand 8b des Einschnittes handelt. Daher liegen die aufeinanderfolgenden Abriebindikatoren 4, welche in Figur 5 gezeigt werden, abwechselnd auf der jeweils gegenüberliegenden Seitenwand des Einschnittes.

In Figur 6 ist eine Querschnittsansicht eines Querschnittes eines nicht erfindungsgemäßen Fahrzeugluftreifens gezeigt, welcher am Grund der Einschnitte verschiedene Abriebindikatoren zeigt, welche bereits im Stand der Technik bekannt sind. Zudem sind die Laufstreifenoberfläche 10 und die Richtung des Laufstreifenabriebs 7 gezeigt. In Figur 6 ist gut erkennbar, dass aufgrund der im Stand der Technik bekannten Abriebindikatoren eine Verengung des Radius am Grund des Einschnittes entsteht, wenn man dem Verlauf der Seitenwand hin zum Grund des Einschnittes hoch zum Scheitelpunkt des Abriebindikators folgt. Der vorstehend beschriebene Verlauft entlang der Grundfläche mit einem Abriebindikator ist enger als ein Verlauf eines Radius, der entstünde, wenn die Abriebindikatoren in Figur 6 nicht vorhanden wären.

Figur 7 zeigt eine Querschnittsansicht eines Querschnittes eines erfindungsgemäßen Fahrzeugluftreifens entlang des Schnittes A-A wie in Figur 2 gezeigt. Da aufgrund der Geometrie und der Lage der Abriebindikatoren 4 in einem Einschnitt 3 in einem Laufstreifen 2 eines erfindungsgemäßen Fahrzeugluftreifens der Radius der Grundfläche 9 des Einschnittes 3 oder am Übergangsbereich zwischen dem Grund und den Seitenwänden 8a, 8b des Einschnittes 3 nicht verengt wird, ist bei einem erfindungsgemäßen Fahrzeugluftreifen die Gefahr von "groove cracks" aufgrund der Abriebindikatoren 4 in den Einschnitten 3 im Laufstreifen 2 eines erfindungsgemäßen Fahrzeugluftriefens geringer.

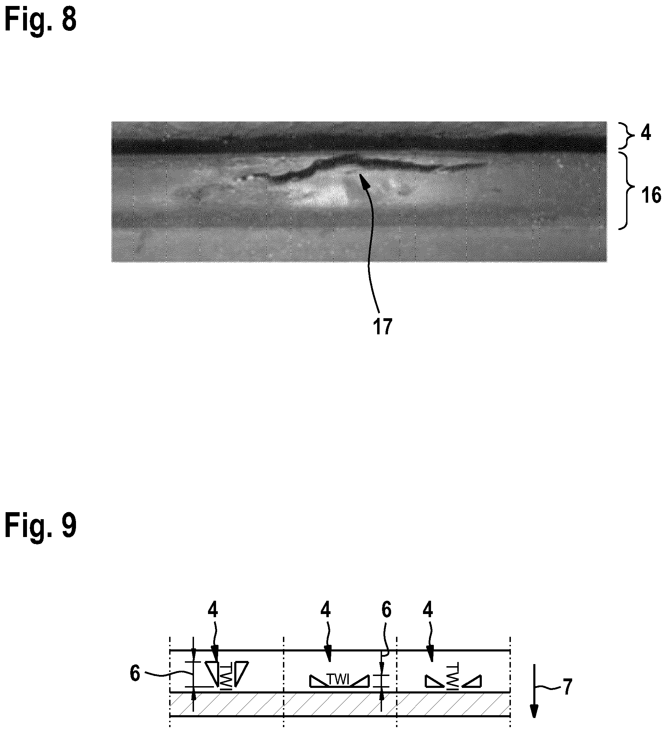

Figur 8 zeigt eine Aufsicht auf einen so genannten "groove crack", welcher an einem Abriebindikator entstanden ist, der an der Grundfläche eines Einschnittes im Laufstreifen eines nicht erfindungsgemäßen Fahrzeugluftreifens sich befindet. Der schwarze geradlinige Rand am oberen Ende des Bildes zeigt die Erhebung des Abriebindikators, aus der eine Verengung des vorstehend beschriebenen Radius an der Grundfläche des Einschnittes im Laufstreifen entsteht.

Figur 9 zeigt eine Querschnittsansicht eines Querschnittes durch einen geradlinigen Einschnitt 3b eines erfindungsgemäßen Fahrzeugluftreifens entlang des Schnittes B-B wie in Figur 2 gezeigt. Gezeigt sind drei weitere mögliche Varianten von Abriebindikatoren 4 an einer Seitenwand 8b, welche mit Hilfe von erhabenen Linien dargestellt werden, wobei die Linien Flächen begrenzen. Die dargestellten Flächen bzw. die mit erhabenen Linien begrenzten Flächen stellen in Figur 9 ausschließlich rechtwinklige Dreiecke mit einem Schriftzug "TWI" dar.

**Bezugszeichenliste:**

1 Fahrzeugluftreifen
2 Laufstreifen
3 Einschnitt
3a zickzack-förmiger Einschnitt
3b geradliniger Einschnitt
4 Abriebindikator
5 Tiefenerstreckung
6 Erstreckungsabmessung des Abriebindikators
7 Richtung des Laufstreifenabriebs
8 Seitenwand der Mittelrille
8a näher an der Laufstreifenmitte gelegene Seitenwand eines Einschnittes
8b weiter von der Laufstreifenmitte entfernte Seitenwand eines Einschnittes
9 Grundfläche des in den Laufstreifen hineinreichenden Einschnittes
10 Laufstreifenoberfläche
11 Tiefenerstreckungsrichtung
12 Öffnung des in den Laufstreifen hineinreichenden Einschnittes
13 Umlaufsrichtung des Fahrzeugreifens
14 axiale Richtung
15 Haupterstreckungsrichtung des in den Laufstreifen hineinreichenden Einschnittes
16 symmetrischer Grund einer Mittelrille
17 "groove crack"
18 Schulterbereich des Laufstreifens
19 mittlerer Bereich des Laufstreifens
20 Laufstreifenmitte
21 Winkel β

**Patentansprüche**

1. Fahrzeugluftreifen mit einem Laufstreifen (2) umfassend mindestens einen Abriebindikator (4),

   - wobei der Abriebindikator (4) in einem oder einer in den Laufstreifen (2) hineinreichenden Einschnitt oder Rille (3) mit einer Tiefenerstreckung (5) angeordnet ist, wobei ein zunehmender Laufstreifenabrieb eine Erstreckungsabmessung (6) des Abriebindikators (4) beeinflusst, und

   - wobei mittels der Erstreckungsabmessung (6) des Abriebindikators (4) oder mittels einer durch den zunehmenden Laufstreifenabrieb beeinflussten Erstreckungsabmessung (6) des Abriebindikators (4) feststellbar ist, ob der Betrag der gegenwärtigen Tiefenerstreckung (5) des Einschnittes oder der Rille (3) über einem vordefinierten Grenzwert liegt,

wobei der Abriebindikator (4) zumindest teilweise an einer Seitenwand des oder der in den Laufstreifen (2) hineinreichenden Einschnittes oder Rille (3) angeordnet ist, wobei der Abriebindikator (4) eine Erhebung an der Seitenwand des oder der in den Laufstreifen (2) hineinreichenden Einschnittes oder Rille (3) ist, wobei die Erhebung

- eine von der Seitenwand des Einschnittes oder der Rille (3) erhabene dreiecksförmige Fläche, oder
- eine von der Seitenwand des Einschnittes oder der Rille (3) erhabene Linie, wobei die Linie vollumfänglich eine dreiecksförmige Fläche begrenzt, ist, **dadurch gekennzeichnet, dass** die dreiecksförmige Fläche ein rechtwinkliges Dreieck mit zwei unterschiedlich langen Katheten umfasst, wobei die längere oder die kürzere Kathete parallel zur Laufstreifenoberfläche verläuft.

2. Fahrzeugluftreifen nach einem der vorangehenden Ansprüche, wobei der oder die in den Laufstreifen (2) hineinreichende Einschnitt oder Rille (3) sich im Schulterbereich des Laufstreifens (2) befindet.

3. Fahrzeugluftreifen nach einem der vorangehenden Ansprüche, wobei sich der Abriebindikator (4) nicht auf die Grundfläche des Einschnittes oder der Rille (3) erstreckt, welche der Öffnung (12) des Einschnittes oder der Rille (3) in der Laufstreifenoberfläche (10) gegenüber liegt.

4. Fahrzeugluftreifen nach einem der vorangehenden Ansprüche, wobei der Einschnitt oder die Rille (3) eine Haupterstreckung mit einer Haupterstreckungsrichtung (15) aufweist, wobei die Haupterstreckungsrichtung (15) des Einschnittes oder der Rille (3) im Wesentlichen parallel zur Umlaufrichtung (13) des Fahrzeugluftreifens (1) ist.

5. Fahrzeugluftreifen nach einem der vorhergehenden Ansprüche, wobei der Einschnitt oder die Rille (3) in Haupterstreckungsrichtung (15) geradlinig und/oder Zick-Zack-förmig verläuft, bevorzugt geradlinig verläuft.

6. Fahrzeugluftreifen nach einem der vorhergehenden Ansprüche, wobei der Fahrzeugluftreifen (1) ein Nutzfahrzeugreifen ist, wobei die Höhe der Tiefenerstreckung (5) des Einschnittes oder der Rille (3) in den Laufstreifen (2)

im Bereich zwischen 8 und 36 mm liegt, besonders bevorzugt im Bereich zwischen 10 und 26 mm liegt.

**Claims**

1. Pneumatic vehicle tyre having a tread (2) comprising at least one wear indicator (4),

- wherein the wear indicator (4) is arranged in a sipe or groove (3) extending into the tread (2) and having an extent of depth (5), wherein an increasing amount of tread wear influences a dimension of the extent (6) of the wear indicator (4), and
- wherein, by means of the dimension of the extent (6) of the wear indicator (4) or by means of a dimension of the extent (6) of the wear indicator (4) influenced by the increasing tread wear, it is possible to determine whether the absolute value of the present extent of depth (5) of the sipe or groove (3) is above a predefined limit value,

wherein the wear indicator (4) is at least partially arranged on a side wall of the sipe or groove (3) extending into the tread (2), wherein the wear indicator (4) is an elevation on the side wall of the sipe or groove (3) extending into the tread (2), wherein the elevation is

- a triangular area raised up from the side wall of the sipe or groove (3), or
- a line raised up from the side wall of the sipe or groove (3), wherein the line fully circumferentially delimits a triangular area, **characterized in that** the triangular area comprises a right-angled triangle with two legs of different lengths, the longer or the shorter leg running parallel to the surface of the tread.

2. Pneumatic vehicle tyre according to one of the preceding claims, wherein the sipe or groove (3) extending into the tread (2) is in the shoulder region of the tread (2).

3. Pneumatic vehicle tyre according to one of the preceding claims, wherein the wear indicator (4) does not extend onto the base area of the sipe or groove (3) that lies opposite the opening (12) of the sipe or groove (3) in the surface of the tread (10).

4. Pneumatic vehicle tyre according to one of the preceding claims, wherein the sipe or groove (3) has a main extent with a main direction of extent (15), wherein the main direction of extent (15) of the sipe or groove (3) is substantially parallel to the circumferential direction (13) of the pneumatic vehicle tyre (1).

5. Pneumatic vehicle tyre according to one of the preceding claims, wherein the sipe or groove (3) extends in the main direction of extent (15) in a straight line and/or the form of a zigzag, preferably extends in a straight line.

6. Pneumatic vehicle tyre according to one of the preceding claims, wherein the pneumatic vehicle tyre (1) is a commercial vehicle tyre, wherein the height of the extent of depth (5) of the sipe or groove (3) into the tread (2) lies in the range between 8 and 36 mm, particularly preferably lies in the range between 10 and 26 mm.

**Revendications**

1. Pneumatique de véhicule comprenant une bande de roulement (2) comprenant au moins un indicateur d'usure (4),

   - l'indicateur d'usure (4) étant disposé dans une entaille ou rainure (3) s'étendant dans la bande de roulement (2), avec une étendue de profondeur (5), une usure croissante de la bande de roulement influençant une dimension d'étendue (6) de l'indicateur d'usure (4), et
   - la dimension d'étendue (6) de l'indicateur d'usure (4) ou une dimension d'étendue (6) de l'indicateur d'usure (4) influencée par l'usure croissante de la bande de roulement permettant d'établir si la mesure de l'étendue actuelle de profondeur (5) de l'entaille ou de la rainure (3) dépasse une valeur limite prédéfinie, l'indicateur d'usure (4) étant disposé au moins en partie au niveau d'une paroi latérale de l'entaille ou de la rainure (3) s'étendant dans la bande de roulement (2),

   l'indicateur d'usure (4) étant un rehaussement au niveau de la paroi latérale de l'entaille ou de la rainure (3) s'étendant dans la bande de roulement (2), le rehaussement étant

   - une surface triangulaire rehaussée depuis la paroi latérale de l'entaille ou de la rainure (3) ou
   - une ligne rehaussée depuis la paroi latérale de l'entaille ou de la rainure (3), la ligne délimitant sur toute sa circonférence une surface triangulaire,

   **caractérisé en ce que** la surface triangulaire comprend un triangle rectangle avec deux côtés d'angle droit de longueurs différentes, le côté d'angle droit le plus long ou le plus court s'étendant parallèlement à la surface de la bande de roulement.

2. Pneumatique de véhicule selon l'une quelconque des revendications précédentes, dans lequel l'entaille ou la rainure (3) s'étendant dans la bande de roulement (2) se trouve dans une région d'épaulement de la bande de roulement (2).

3. Pneumatique de véhicule selon l'une quelconque des revendications précédentes, dans lequel l'indicateur d'usure (4) ne s'étend pas sur la surface de base de l'entaille ou de la rainure (3) qui est située à l'opposé de l'ouverture (12) de l'entaille ou de la rainure (3) dans la surface de la bande de roulement (10).

4. Pneumatique de véhicule selon l'une quelconque des revendications précédentes, dans lequel l'entaille ou la rainure (3) présente une étendue principale avec une direction d'étendue principale (15), la direction d'étendue principale (15) de l'entaille ou de la rainure (3) étant essentiellement parallèle à la direction périphérique (13) du pneumatique de véhicule (1).

5. Pneumatique de véhicule selon l'une quelconque des revendications précédentes, dans lequel l'entaille ou la rainure (3) s'étend dans la direction d'étendue principale (15) sous forme rectiligne et/ou en zigzag, de préférence s'étend sous forme rectiligne.

6. Pneumatique de véhicule selon l'une quelconque des revendications précédentes, dans lequel le pneumatique de véhicule (1) est un pneumatique de véhicule utilitaire, la hauteur de l'étendue de profondeur (5) de l'entaille ou de la rainure (3) de la bande de roulement (2) étant située dans une plage comprise entre 8 et 36 mm, particulièrement préférablement dans une plage comprise entre 10 et 26 mm.

# Fig. 1

# Fig. 2

# Fig. 3

## Schnitt A-A

# Fig. 4

## Schnitt B-B

# Fig. 5

## Schnitt C-C

# Fig. 6

Schnitt A-A

# Fig. 7

Schnitt A-A

## Fig. 8

## Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015185233 A1
- DE 102015211532 A1